Europäisches Patentamt

European Patent Office

Office européen des brevets

(19)

(11) Veröffentlichungsnummer: **0 282 516 B1**

# EUROPÄISCHE PATENTSCHRIFT

(12)

(45) Veröffentlichungstag der Patentschrift:
**03.04.91 Patentblatt 91/14**

(51) Int. Cl.⁵ : **C04B 41/52, C04B 41/53,**
E04F 13/02, E04G 23/00

(21) Anmeldenummer : **87905593.7**

(22) Anmeldetag : **31.08.87**

(86) Internationale Anmeldenummer :
**PCT/DE87/00391**

(87) Internationale Veröffentlichungsnummer :
**WO 88/01992 24.03.88 Gazette 88/07**

---

(54) **VERFAHREN ZUR VERHÜTUNG VON FARBAUTRAGUNGEN AUF FLÄCHEN AUS NATUR- UND KUNSTSTEIN.**

Die Akte enthält technische Angaben, die nach
dem Eingang der Anmeldung eingereicht
wurden und die nicht in dieser Patentschrift
enthalten sind.

(30) Priorität : 08.09.86 DE 3630520

(43) Veröffentlichungstag der Anmeldung :
21.09.88 Patentblatt 88/38

(45) Bekanntmachung des Hinweises auf die
Patenterteilung :
03.04.91 Patentblatt 91/14

(84) Benannte Vertragsstaaten :
AT BE CH DE FR GB IT LI LU NL SE

(56) Entgegenhaltungen :
EP-A- 0 022 212
BE-A- 901 692
US-A- 2 306 570
US-A- 4 241 141
Chemical Abstracts, Band 85, 1976, (Columbus,Ohio, US), Seite 272, Zusammenfassung
197135g, & CS, A, 155906 (A. PROUZA et al.),
15. November 1974

(73) Patentinhaber : RAMESOHL, Horst
Ludmillastrasse 21
W-8000 München 90 (DE)

(72) Erfinder : RAMESOHL, Horst
Ludmillastrasse 21
W-8000 München 90 (DE)

## Beschreibung

Flächen aus Natur- und Kunststein werden oft durch Farbauftragungen in Form von z.B. Graffiti beschädigt. Durch mechanische oder chemische Behandlung können diese Beschädigungen entfernt werden. Dabei werden die zu reinigenden Flächen jedoch mechanisch oder chemisch angegriffen. Substanzverluste an den zu reinigenden Flächen sind oft unvermeidbar ; nur durch einen hohen Aufwand an Zeit und Geld ist es möglich, Folgeschäden zu verhindern.

Zum Schutz der Flächen sind zur Verhinderung oder Verminderung der Haftung von Farben auf den zu schützenden Flächen unterschiedliche Verfahren und Materialien bekannt.

Das belgische Patent BE-A-901 692 vom 8.2.85 beschreibt ein Verfahren zum Schutz von Natur- und Kunststein sowie Beton vor unerwünschten Farbauftragungen, nach dem zuerst eine hydrophobierende Schutzschicht aus einem Acrylcopolymer und sodann eine Deckschicht aus einem Gemisch aus Polyacrylatharz und einem aliphatischen Polyisocyanat aufgetragen wird. Dadurch soll eine ansprechende Oberflächenstruktur erreicht werden, die gegen Atmosphärilien, Chemikalien und Lösemittel zur Entfernung von Farbauftragungen widerstandsfähig ist. Es handelt sich hier um eine dauerhafte Schutzbeschichtung, die im Gegensatz zu der erfindungsgemäßen Anmeldung steht, die eine feste, jedoch mit geeigneten Mitteln leicht ablösbare, die Beschmutzungen aufnehmende Opferschicht vorsieht.

In den Chemical Abstracts 93, Nr. 118, 03/11/80 Columbus, Ohio, Abstract Nr. 169 820 y, ist eine Anmeldung PCT 80 01,072, beschrieben, die eine wachsartige Beschichtung zum Schutz von Mauerwerk gegen Plakatverklebungen und Farbauftragungen vorsieht. Hier fehlt die erfindungsgemäß erforderliche öl- und wasserabweisende Imprägnierung, die ein Eindringen des Wachses in den Stein und die daraus resultierenden Schäden verhindert

Öl- wasser- und schmutzabweisende Imprägnierungen und Beschichtungen verhindern ein Eindringen der Farblösungen in den Stein, verbinden sich aber in vielen Fällen so mit den pigmentierten Lösemitteln der Farben, daß sie bei der Farbentfernung mit entfernt werden müssen. Eine Ergänzung oder Erneuerung ist meist erforderlich. Nicht nur die Kosten sind hierbei von Bedeutung, sondern auch die Tatsache, daß bei mehrfach wiederholten Behandlungen eine Beschichtung entsteht, die aus Gründen der Optik oder der Steinerhaltung unerwünscht ist.

Wachse – durch Erwärmen oder durch Versatz mit Lösemitteln verflüssigt – dringen kapillar bei der Aufbringung auf die zu schützenden Flächen in die jeweiligen Untergründe ein und bilden an den Oberflächen Schutzfilme aus. Beim Auftrag lösungsmittelhaltiger Farbenwerden die Wachse angelöst ;

pigmentierte Lösemittel dringen in den Stein ein und verfärben diesen. Die eingebrachten Wachse werden durch Umwelteinflüsse zersetzt. Die Zersetzungsprodukte schädigen den Stein und machen ihn unansehnlich

Das erfindungsgemäße, dieser Anmeldung zugrundeliegende Verfahren kombiniert die Vorteile der beiden bekannten Methoden, der oleophoben und hydrophoben Imprägnierung und der Wachsbeschichtung. Es sei beispielhaft kurz dargestellt :

Die zu schützende Fläche aus Natur- oder Kunststein wird öl- und wasserabweisend imprägniert. Nach der vorgeschriebenen Reaktionszeit erfolg eine Beschichtung mit z.B. durch Zugabe von Lösungsmitteln verflüssigten Hartwachsen in ausreichender Schichtstärke. Nach Abdunsten der Lösungsmittel entsteht eine geschlossene Wachsschicht mit ausreichender Haftfestigkeit und Abriebfestigkeit. Bei dem Versuch diese Schicht mit dem Filzschreiber oder dem Kugelschreiber zu beschmieren, setzen sich die Geräte mit Wachs zu ; sie werden unbrauchbar. Sprühfarben haften auf der Wachsschicht. Lösungsmittel können die Wachsschicht anlösen und verfärben. Sie greifen aber die Imprägnierung nicht mehr an. Die verfärbten Wachsschichten sind durch Hochdruck-Heißwasser leicht zu reinigen. Das Wachs wird abgeschmolzen und abgewaschen. Die öl- und wasserabweisende Imprägnierung verhindert ein Eindringen der Waschbrühe in den Stein. Weder die Imprägnierung noch die zu schützende Oberfläche werden beschädigt ; lediglich die als Opferschicht vorgesehene billige Wachsschicht muß erneuert werden.

Das der Anmeldung zugrundeliegende Verfahren verhindert nachhaltig Substanzverluste an von Graffiti häufig beschädigten Flächen. Es ist daher für den Denkmalschutz besonders geeignet.

## Ansprüche

1. Verfahren zur Verhinderung von Farbauftragungen auf Natur- und Kunststein durch Imprägnierung des Steines, dadurch gekennzeichnet, daß auf den öl- und wasserabweisend imprägnierten Stein eine farbaufnehmende ablösbare Beschichtung als Opferschicht aufgebracht wird, die die Imprägnierung nicht durchdringen kann.

2. Verfahren nach Anspruch 1, dadurch gekennzeichnet, daß eine wachsartige Beschichtung aufgetragen wird.

3. Verfahren nach Anspruch 1, dadurch gekennzeichnet, daß die Beschichtung durch Wärme abgelöst wird.

4. Verfahren nach Anspruch 1, dadurch gekennzeichnet, daß die Beschichtung chemisch abgelöst wird.

5. Verfahren nach Anspruch 1, dadurch gekennzeichnet, daß die Beschichtung durch Wasser abgelöst wird.

## Revendications

1. Procédé de protection par imprégnation des surfaces en pierre naturelle et artificielle contre les colorations. La spécificité du procédé consiste en l'application d'un revêtement réactif séparable, qui absorbe les colorants, sur les pierres préablablement imperméablisées contre les infiltrations d'huile et d'eau. Le revêtement réactif ne pénètre pas dans la pierre ainsi imprégnée.

2. Procédé suivant spécification 1, caractérisé par l'application d'une couche en cire.

3. Procédé suivant spécification 1, caractérisé par le fait que le revêtement s'enlève sous l'effet de la chaleur.

4. Procédé suivant spécification 1, caractérisé par le fait que le revêtement s'enlève par l'action de produits chimiques.

5. Procédé suivant spécification 1, caractérisé par le fait que le revêtement s'enlève à l'eau.

## Claims

1. Procedure aiming at the prevention of paint applications on natural and artificial stone by impregnating the stone, characterized by the feature that a paint-absorbing, removable coating is applied onto the stone, which has been previously impregnated to be oleophobic and water-repellent, to serve as a disposable layer, which cannot penetrate through the impregnating layer.

2. Procedure in accordance with claim no. 1, characterized by the feature that a wax-like coating is applied.

3. Procedure in accordance with claim no. 1, characterized by the feature that the coating is removed by heat.

4. Procedure in accordance with claim no. 1, characterized by the feature that the coating is removed chemically.

5. Procedure in accordance with claim no. 1, characterized by the feature that the coating is removed by water.